# FASCICULE DE BREVET EUROPEEN

(11) **EP 4 375 194 B1**
(45) Date de publication et mention de la délivrance du brevet: **27.08.2025**
(21) Numéro de dépôt: 23211881.0
(22) Date de dépôt: 24.11.2023
(51) Int. Cl.: B64D 29/08

(54) **SYSTÈME DE PROPULSION D'UN AÉRONEF COMPORTANT UNE NACELLE ASYMÉTRIQUE**
ANTRIEBSSYSTEM EINES LUFTFAHRZEUGS, WELCHES EINE ASYMMETRISCHE GONDEL AUFWEIST
AIRCRAFT PROPULSION SYSTEM COMPRISING AN ASYMMETRIC NACELLE

(30) Priorité: 28.11.2022 FR 2212408
(43) Date de publication de la demande: 29.05.2024
(73) Titulaire: AIRBUS OPERATIONS, 31060 Toulouse Cedex 9 (FR)
(72) Inventeur: GOUGEON, Pascal, 31060 TOULOUSE (FR); BELLANGER, Alexandre, 31060 TOULOUSE (FR); VANDERBAUWEDE, Simon, 31060 TOULOUSE (FR)
(74) Mandataire: Cabinet Le Guen Maillet

(56) Documents cités:
- FR-A1- 3 053 957
- FR-A1- 3 064 980
- US-A1- 2020 023 984

## Description

### DOMAINE TECHNIQUE

La présente invention concerne un système de propulsion d'un aéronef comportant une nacelle asymétrique pour une turbomachine. La présente invention concerne également un aéronef comportant au moins un tel système de propulsion.

### ÉTAT DE LA TECHNIQUE ANTÉRIEURE

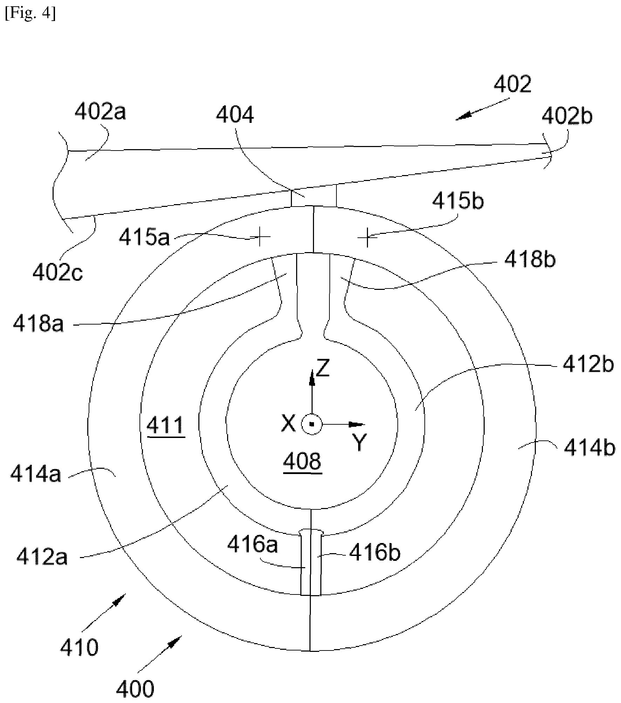

La Fig. 4 est une vue de face d'un système de propulsion 400 de l'état de la technique pour un aéronef. L'aéronef comporte un fuselage de part et d'autre duquel est fixée une aile 402. Le système de propulsion 400 comprend classiquement un mât 404, une turbomachine présentant un noyau 408 et une nacelle 410. La Fig. 4 montre le côté bâbord d'un aéronef où l'aile 402 présente une extrémité proximale 402a solidaire du fuselage de l'aéronef et une extrémité distale 402b. Classiquement, l'intrados 402c de l'aile 402 monte entre l'extrémité proximale 402a et l'extrémité distale 402b.

Le mât 404 est fixé sous l'aile et il porte le noyau 408 et la nacelle 410.

Afin d'assurer la maintenance du système de propulsion 400, la nacelle 410 présente des capots qui sont mobiles entre une position fermée dans laquelle les capots sont resserrés autour du noyau 408 et une position ouverte dans laquelle les capots sont écartés du noyau 408.

En particulier, la nacelle 410 présente deux capots intérieurs 412a-b (également appelés IFS pour « Internal Fixed Structure » en terminologie Anglo-Saxonne) et deux capots extérieurs 414a-b (également appelés OS pour « Outer Structure » en terminologie Anglo-Saxonne).

Chaque capot 412a-b, 414a-b prend globalement la forme d'un demi-cylindre et la nacelle 410 présente, de part et d'autre d'un plan milieu XZ vertical et passant par l'axe central du noyau 408, un capot intérieur 412a-b et un capot extérieur 414a-b autour du capot intérieur 412a-b.

En position fermée, les deux capots intérieurs 412a-b sont jointifs au niveau du plan milieu et forment globalement un cylindre qui entoure le noyau 408 et constitue la partie interne d'une veine secondaire 411, et les deux capots extérieurs 414a-b sont jointifs au niveau du plan milieu et forment globalement un cylindre qui entoure les capots intérieurs 412a-b et constitue la partie externe de la veine secondaire 411.

Chaque capot extérieur 414a-b est monté articulé sur le mât 404 par l'intermédiaire de charnières dont les axes 415a-b sont globalement parallèles à l'axe longitudinal de la turbomachine.

Chaque capot intérieur 412a-b est fixé au capot extérieur 414a-b associé et la fixation est assurée par des éléments structurels inférieurs 416a-b et des éléments structurels supérieurs 418a-b. Ainsi, pour chaque capot extérieur 414a-b, le capot intérieur 412a-b associé est fixé au capot extérieur 414a-b en partie basse à 6 heures par un élément structurel inférieur 416a-b et en partie haute à 12 heures par un élément structurel supérieur 418a-b.

Les deux axes 415a-b des charnières sont symétriques l'un de l'autre par rapport au plan milieu XZ et les éléments structurels inférieurs 416a-b sont jointifs au niveau du plan milieu XZ.

Dans le cadre de l'intégration d'un système de propulsion 400 de grand diamètre et du fait de la géométrie de l'aile 402, l'ouverture des capots, et en particulier ici du capot bâbord 414a, est limitée du fait de la proximité de l'aile 402 et il est donc nécessaire de trouver un arrangement particulier qui permette une plus grande ouverture et donc une meilleure accessibilité lors des opérations de maintenance.

Le document FR-A-3 053 957 divulgue un système de propulsion de l'état de la technique.

### EXPOSÉ DE L'INVENTION

Un objet de la présente invention est de proposer un système de propulsion qui comporte une nacelle asymétrique.

À cet effet, est proposé un système de propulsion pour un aéronef, ledit système de propulsion présentant un axe longitudinal et un plan milieu vertical passant par l'axe longitudinal et comportant :
- un mât destiné à être fixé sous une aile à dièdre positif sur un côté bâbord de l'aéronef,
- une turbomachine avec un noyau fixé au mât, et
- une nacelle dans laquelle est logée la turbomachine et qui comporte :
   - deux capots intérieurs agencés autour du noyau,
   - deux capots extérieurs agencés autour des capots intérieurs,
   - deux éléments structurels inférieurs, chacun assurant la fixation d'un capot intérieur au capot extérieur associé au niveau d'une partie basse de la nacelle, et
   - deux éléments structurels supérieurs, chacun assurant la fixation d'un capot intérieur au capot extérieur associé au niveau d'une partie haute de la nacelle,

où chaque capot extérieur est monté articulé sur le mât par l'intermédiaire de charnières dont les axes sont globalement parallèles à l'axe longitudinal,
où, en position fermée et en partie haute de la nacelle, les deux capots extérieurs sont jointifs au niveau d'un plan de séparation qui contient l'axe longitudinal et présente avec le plan milieu, un angle aigu et compté positivement dans le sens horaire en vue de face, et
où l'axe correspondant au capot extérieur à bâbord, est disposé à bâbord par rapport au plan de séparation et où l'axe correspondant au capot extérieur à tribord, est disposé à tribord par rapport à un axe symétrique de l'axe correspondant au capot extérieur à bâbord par rapport au plan milieu.

À cet effet, est également proposé un système de propulsion pour un aéronef, ledit système de propulsion présentant un axe longitudinal et un plan milieu vertical passant par l'axe longitudinal et comportant :
- un mât destiné à être fixé sous une aile à dièdre positif sur un côté tribord de l'aéronef,
- une turbomachine avec un noyau fixé au mât, et
- une nacelle dans laquelle est logée la turbomachine et qui comporte :
   - deux capots intérieurs agencés autour du noyau,
   - deux capots extérieurs agencés autour des capots intérieurs,
   - deux éléments structurels inférieurs, chacun assurant la fixation d'un capot intérieur au capot extérieur associé au niveau d'une partie basse de la nacelle, et
   - deux éléments structurels supérieurs, chacun assurant la fixation d'un capot intérieur au capot extérieur associé au niveau d'une partie haute de la nacelle,

où chaque capot extérieur est monté articulé sur le mât par l'intermédiaire de charnières dont les axes sont globalement parallèles à l'axe longitudinal,
où, en position fermée et en partie haute de la nacelle, les deux capots extérieurs sont jointifs au niveau d'un plan de séparation qui contient l'axe longitudinal et présente avec le plan milieu, un angle aigu et compté positivement dans le sens anti-horaire en vue de face, et
où l'axe correspondant au capot extérieur à tribord, est disposé à tribord par rapport au plan de séparation et où l'axe correspondant au capot extérieur à bâbord, est disposé à bâbord par rapport à un axe symétrique de l'axe correspondant au capot extérieur à tribord par rapport au plan milieu.

Avec une telle implémentation, l'ouverture des capots est améliorée.

Selon un mode de réalisation particulier, en partie basse de la nacelle et en position fermée, les deux capots extérieurs et les éléments structurels inférieurs sont jointifs au niveau du plan de séparation.

Selon un mode de réalisation particulier, en partie basse de la nacelle et en position fermée, les deux capots extérieurs et les éléments structurels inférieurs sont jointifs au niveau du plan de séparation.

L'invention propose également un aéronef comportant une aile sous laquelle est fixé au moins un système de propulsion selon l'une des variantes précédentes par l'intermédiaire de son mât.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de face d'un aéronef selon l'invention,
Fig. 2 est une vue de face d'un système de propulsion selon l'invention en position fermée,
Fig. 3 est une vue de face du système de propulsion de la Fig. 2 en position ouverte, et
Fig. 4 est une vue de face d'un système de propulsion de l'état de la technique en position fermée.

### EXPOSÉ DÉTAILLÉ DE MODES DE RÉALISATION

Dans la description qui suit, les termes relatifs à une position sont pris en référence à un aéronef en position d'avancement.

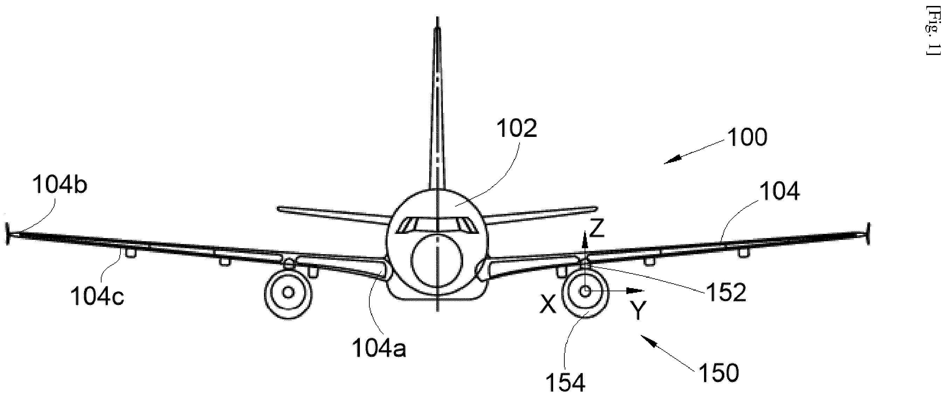

La Fig. 1 montre un aéronef 100 qui comporte un fuselage 102 et une aile 104 de chaque côté du fuselage 102. Sous chaque aile 104, l'aéronef 100 présente un système de propulsion 150 qui comporte un mât 152, une turbomachine et une nacelle 154. La turbomachine qui comporte un noyau est logée à l'intérieur de la nacelle 154.

Dans la description qui suit, et par convention, on appelle X l'axe longitudinal du système de propulsion 150 orienté positivement dans le sens d'avancement de l'aéronef 100, on appelle Y la direction transversale qui est horizontale lorsque l'aéronef 100 est au sol et Z la direction verticale lorsque l'aéronef 100 est au sol, ces trois directions X, Y et Z étant orthogonales entre elles. L'axe longitudinal X est l'axe central du noyau.

Chaque aile 104 présente une extrémité proximale 104a solidaire du fuselage 102 et une extrémité distale 104b. Classiquement, l'intrados 104c de l'aile 104 monte entre l'extrémité proximale 104a et l'extrémité distale 104b. L'aile 104 est donc à dièdre positif.

Le mât 152 est fixé sous l'intrados 104c de l'aile 104 et le mât 152 porte le noyau et la nacelle 154.

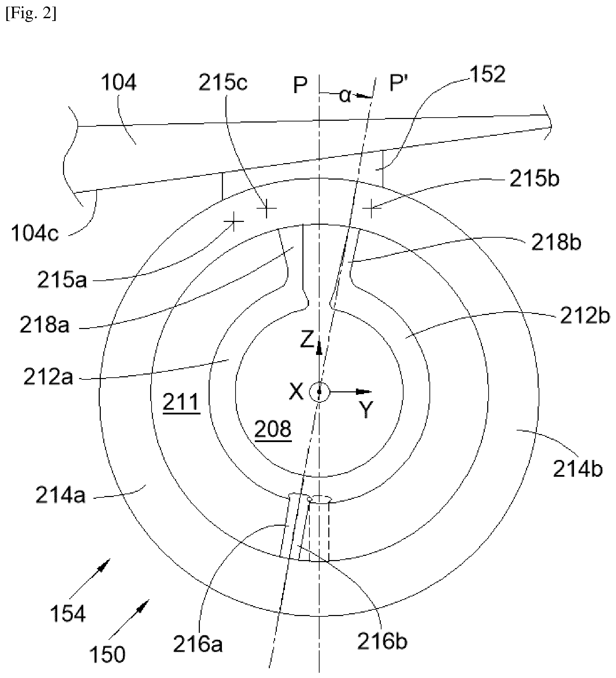

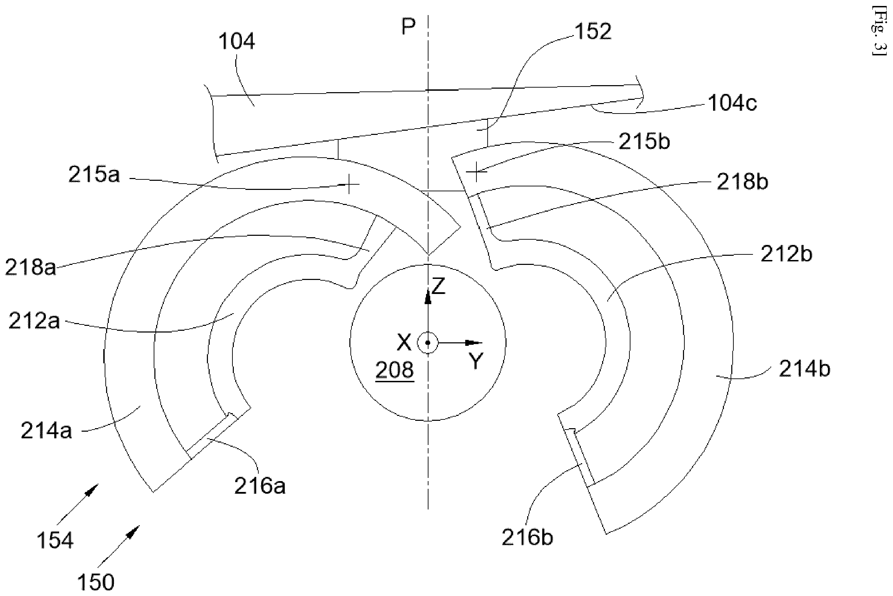

La Fig. 2 montre le système de propulsion 150 en position fermée et la Fig. 3 montre le système de propulsion 150 en position ouverte. Le système de propulsion 150 des Figs. 2 et 3 est celui pour lequel le mât 152 est fixé sur un côté bâbord sur l'aéronef 100.

La nacelle 154 présente des capots qui sont mobiles entre la position fermée dans laquelle les capots sont resserrés autour du noyau 208 et une position ouverte dans laquelle les capots sont écartés du noyau 208. La nacelle 154 présente deux capots intérieurs 212a-b (également appelés IFS pour « Internal Fixed Structure » en terminologie Anglo-Saxonne) et deux capots extérieurs 214a-b (également appelés OS pour « Outer Structure » en terminologie Anglo-Saxonne). Les deux capots intérieurs 212a-b sont agencés autour du noyau 208 et les deux capots extérieurs 214a-b sont agencés autour des capots intérieurs 212a-b.

Le système de propulsion 150 présente un plan milieu P (XZ) vertical et passant par l'axe longitudinal X et un plan de séparation P' qui contient l'axe longitudinal X du noyau 208 correspondant et présente avec le plan milieu P, un angle α aigu et compté positivement dans le sens horaire en vue de face. L'angle α est par exemple compris entre 5° et 20°, et plus particulièrement de l'ordre de 10°.

Pour un système de propulsion 150 dont le mât 152 est fixé sur un côté tribord de l'aéronef 100, le système de propulsion 150 présente un plan milieu P (XZ) vertical et passant par l'axe longitudinal X du noyau 208 correspondant et un plan de séparation P' qui contient l'axe longitudinal X et présente, avec le plan milieu P, un angle α aigu et compté positivement dans le sens anti-horaire en vue de face. L'angle α est par exemple compris entre 5° et 20°, et plus particulièrement de l'ordre de 10°.

C'est-à-dire qu'entre un système de propulsion 150 à bâbord et un à tribord, l'inclinaison du plan de séparation P' par rapport au plan milieu P est inversée du fait de l'orientation inversée de l'intrados 104c de l'aile 104.

Chaque capot 212a-b, 214a-b prend globalement la forme d'une portion de cylindre et la nacelle 154 présente, de part et d'autre du plan de séparation P', un capot intérieur 212a-b et un capot extérieur 214a-b autour du capot intérieur 212a-b. Chaque capot 212a-b, 214a-b est coaxial avec l'axe longitudinal X.

En partie haute de la nacelle 154, c'est-à-dire au voisinage de la zone 12 heures, en position fermée, les deux capots extérieurs 214a-b sont jointifs au niveau du plan de séparation P'.

Dans le mode de réalisation de l'invention présenté à la Fig. 2, en partie basse de la nacelle 154, c'est-à-dire au voisinage de la zone 6 heures, en position fermée, les deux capots extérieurs 214a-b sont jointifs au niveau du plan de séparation P', ce qui permet de décaler les serrures qui sont disposées au niveau du plan de séparation P' en les décalant pour les éloigner du sol. En outre, ce mode de réalisation permet une meilleure accessibilité pour le passage d'une échelle en position ouverte.

Mais, dans un autre mode de réalisation représenté en traits pointillés sur la Fig. 2, les deux capots extérieurs 214a-b peuvent être jointifs au niveau du plan de séparation P.

En partie haute de la nacelle 154, les deux capots intérieurs 212a-b ne sont pas jointifs en position fermée pour permettre le passage des éléments qui assurent la fixation du noyau 208 au mât 152.

En partie basse de la nacelle 154 et en position fermée, les deux capots intérieurs 212a-b sont jointifs au niveau du plan de séparation P' ou du plan milieu P comme pour les capots extérieurs 214a-b.

En position fermée, les deux capots intérieurs 212a-b forment globalement un cylindre qui entoure le noyau 208 et constitue la partie interne d'une veine secondaire 211 et les deux capots extérieurs 214a-b forment globalement un cylindre qui entoure les capots intérieurs 212a-b et constitue la partie externe de la veine secondaire 211.

Chaque capot intérieur 212a-b est fixé au capot extérieur 214a-b associé et la fixation est assurée par des éléments structurels inférieurs 216a-b au niveau de la partie basse de la nacelle 154 et par des éléments structurels supérieurs 218a-b au niveau de la partie haute de la nacelle 154. Ainsi, pour chaque capot extérieur 214a-b, le capot intérieur 212a-b associé est fixé au capot extérieur 214a-b en partie haute au voisinage de la zone 12 heures par un élément structurel supérieur 218a-b et en partie basse au voisinage de la zone 6 heures par un élément structurel inférieur 216a-b.

Selon le cas, les éléments structurels inférieurs 216a-b sont jointifs au niveau du plan de séparation P' ou du plan milieu P.

Chaque capot extérieur 214a-b est monté articulé entre la position ouverte et la position fermée sur le mât 152 par l'intermédiaire de charnières dont les axes 215a-b sont globalement parallèles à l'axe longitudinal X.

Dans le mode de réalisation de l'invention présenté à la Fig. 2, l'axe 215b qui est à bâbord et correspondant au capot extérieur 214b à bâbord, est disposé à bâbord par rapport au plan de séparation P' et l'axe 215a qui est à tribord et correspondant au capot extérieur 214a à tribord, est disposé à tribord par rapport à un axe 215c symétrique de l'axe 215b correspondant au capot extérieur 214b à bâbord par rapport au plan milieu P. Les deux axes 215a-b des charnières sont ainsi asymétriques l'un de l'autre par rapport au plan milieu P. Le décalage de l'axe 215a qui est à tribord permet une cinématique d'ouverture différente pour le capot extérieur 214a à tribord où l'ouverture dudit capot extérieur 214a à tribord est moins limitée par la présence de l'aile 104. Le décalage permet également d'éloigner la partie haute des inverseurs de poussée du système de propulsion 150 des becs du bord d'attaque de l'aile 104.

Pour un système de propulsion 150 monté à tribord, c'est l'axe 215a qui est à tribord et correspondant au capot extérieur 214a à tribord, qui est disposé à tribord par rapport au plan de séparation P' et l'axe 215b qui est à bâbord et correspondant au capot extérieur 214b à bâbord, est disposé à bâbord par rapport à un axe symétrique de l'axe 215a correspondant au capot extérieur 214a à tribord par rapport au plan milieu P. Les deux axes 215a-b des charnières sont ainsi asymétriques l'un de l'autre par rapport au plan milieu P. Le décalage de l'axe 215b qui est à bâbord permet une cinématique d'ouverture différente pour le capot extérieur 214b à bâbord où l'ouverture dudit capot extérieur 214b à bâbord est moins limitée par la présence de l'aile 104.

## Revendications

1. Système de propulsion (150) pour un aéronef (100), ledit système de propulsion (150) présentant un axe longitudinal (X) et un plan milieu (P) vertical passant par l'axe longitudinal (X) et comportant :
- un mât (152) destiné à être fixé sous une aile (104) à dièdre positif sur un côté bâbord de l'aéronef (100),
- une turbomachine avec un noyau (208) fixé au mât (152), et
- une nacelle (154) dans laquelle est logée la turbomachine et qui comporte :
- deux capots intérieurs (212a-b) agencés autour du noyau (208),
- deux capots extérieurs (214a-b) agencés autour des capots intérieurs (212a-b),
- deux éléments structurels inférieurs (216a-b), chacun assurant la fixation d'un capot intérieur (212a-b) au capot extérieur (214a-b) associé au niveau d'une partie basse de la nacelle (154), et
- deux éléments structurels supérieurs (218a-b), chacun assurant la fixation d'un capot intérieur (212a-b) au capot extérieur (214a-b) associé au niveau d'une partie haute de la nacelle (154),
où chaque capot extérieur (214a-b) est monté articulé sur le mât (152) par l'intermédiaire de charnières dont les axes (215a-b) sont globalement parallèles à l'axe longitudinal (X),
le système étant **caractérisé en ce que** :
en position fermée et en partie haute de la nacelle (154), les deux capots extérieurs (214a-b) sont jointifs au niveau d'un plan de séparation (P') qui contient l'axe longitudinal (X) et présente avec le plan milieu (P), un angle (α) aigu et compté positivement dans le sens horaire en vue de face, et
l'axe (215b) correspondant au capot extérieur (214b) à bâbord, est disposé à bâbord par rapport au plan de séparation (P') et où l'axe (215a) correspondant au capot extérieur (214a) à tribord, est disposé à tribord par rapport à un axe (215c) symétrique de l'axe (215b) correspondant au capot extérieur (214b) à bâbord par rapport au plan milieu (P).

2. Système de propulsion (150) pour un aéronef (100), ledit système de propulsion (150) présentant un axe longitudinal (X) et un plan milieu (P) vertical passant par l'axe longitudinal (X) et comportant :
- un mât (152) destiné à être fixé sous une aile (104) à dièdre positif sur un côté tribord de l'aéronef (100),
- une turbomachine avec un noyau (208) fixé au mât (152), et
- une nacelle (154) dans laquelle est logée la turbomachine et qui comporte :
- deux capots intérieurs (212a-b) agencés autour du noyau (208),
- deux capots extérieurs (214a-b) agencés autour des capots intérieurs (212a-b),
- deux éléments structurels inférieurs (216a-b), chacun assurant la fixation d'un capot intérieur (212a-b) au capot extérieur (214a-b) associé au niveau d'une partie basse de la nacelle (154), et
- deux éléments structurels supérieurs (218a-b), chacun assurant la fixation d'un capot intérieur (212a-b) au capot extérieur (214a-b) associé au niveau d'une partie haute de la nacelle (154),
où chaque capot extérieur (214a-b) est monté articulé sur le mât (152) par l'intermédiaire de charnières dont les axes (215a-b) sont globalement parallèles à l'axe longitudinal (X),
le système étant **caractérisé en ce que** :
en position fermée et en partie haute de la nacelle (154), les deux capots extérieurs (214a-b) sont jointifs au niveau d'un plan de séparation (P') qui contient l'axe longitudinal (X) et présente avec le plan milieu (P), un angle (α) aigu et compté positivement dans le sens anti-horaire en vue de face, et
l'axe (215a) correspondant au capot extérieur (214a) à tribord, est disposé à tribord par rapport au plan de séparation (P') et où l'axe (215b) correspondant au capot extérieur (214b) à bâbord, est disposé à bâbord par rapport à un axe (215c) symétrique de l'axe (215a) correspondant au capot extérieur (214a) à tribord par rapport au plan milieu (P).

3. Système de propulsion (150) selon l'une des revendications 1 ou 2, où en partie basse de la nacelle (154) et en position fermée, les deux capots extérieurs (214a-b) et les éléments structurels inférieurs (216a-b) sont jointifs au niveau du plan de séparation (P').

4. Système de propulsion (150) selon l'une des revendications 1 ou 2, où en partie basse de la nacelle (154) et en position fermée, les deux capots extérieurs (214a-b) et les éléments structurels inférieurs (216a-b) sont jointifs au niveau du plan de séparation (P).

5. Aéronef (100) comportant une aile (104) sous laquelle est fixé au moins un système de propulsion (150) selon l'une des revendications précédentes par l'intermédiaire de son mât (152).

## Patentansprüche

1. Antriebssystem (150) für ein Luftfahrzeug (100), wobei das Antriebssystem (150) eine Längsachse (X) und eine senkrechte Mittelebene (P) aufweist, die durch die Längsachse (X) verläuft, und Folgendes umfasst:
- einen Pylon (152), der unter einem Flügel (104) mit positiver V-Stellung auf einer Backbordseite des Luftfahrzeugs (100) befestigt werden soll,
- ein Turbinentriebwerk mit einem Kern (208), der am Pylon (152) befestigt ist, und
- eine Gondel (154), in der das Turbinentriebwerk untergebracht ist und die Folgendes umfasst:
- zwei innere Hauben (212a-b), die um den Kern (208) herum angeordnet sind,
- zwei äußere Hauben (214a-b), die um die inneren Hauben (212a-b) herum angeordnet sind,
- zwei untere Strukturbauteile (216a-b), die jeweils für die Befestigung einer inneren Haube (212a-b) an der zugehörigen äußeren Haube (214a-b) im Bereich eines unteren Abschnitts der Gondel (154) sorgen, und
- zwei obere Strukturbauteile (218a-b), die jeweils für die Befestigung einer inneren Haube (212a-b) an der zugehörigen äußeren Haube (214a-b) im Bereich eines oberen Abschnitts der Gondel (154) sorgen,
wobei jede äußere Haube (214a-b) über Scharniere an dem Pylon (152) angelenkt ist, deren Achsen (215a-b) im Allgemeinen parallel zur Längsachse (X) verlaufen, wobei das System **dadurch gekennzeichnet ist, dass**:
die beiden äußeren Hauben (214a-b) in der geschlossenen Stellung und im oberen Abschnitt der Gondel (154) im Bereich einer Trennebene (P') aneinanderliegen, die die Längsachse (X) enthält und mit der Mittelebene (P) einen spitzen Winkel (α) bildet, der in der Vorderansicht in Uhrzeigerrichtung positiv ist, und
wobei die Achse (215b), die der äußeren Haube (214b) auf der Backbordseite entspricht, bezogen auf die Trennebene (P') backbordseitig angeordnet ist und wobei die Achse (215a), die der äußeren Haube (214a) auf der Steuerbordseite entspricht, bezogen auf eine Achse (215c), die bezogen auf die Mittelebene (P) zu der Achse (215b) symmetrisch ist, die der äußeren Haube (214b) auf der Backbordseite entspricht, steuerbordseitig angeordnet ist.

2. Antriebssystem (150) für ein Luftfahrzeug (100), wobei das Antriebssystem (150) eine Längsachse (X) und eine senkrechte Mittelebene (P) aufweist, die durch die Längsachse (X) verläuft, und Folgendes umfasst:
- einen Pylon (152), der unter einem Flügel (104) mit positiver V-Stellung auf einer Steuerbordseite des Luftfahrzeugs (100) befestigt werden soll,
- ein Turbinentriebwerk mit einem Kern (208), der am Pylon (152) befestigt ist, und
- eine Gondel (154), in der das Turbinentriebwerk untergebracht ist und die Folgendes umfasst:
- zwei innere Hauben (212a-b), die um den Kern (208) herum angeordnet sind,
- zwei äußere Hauben (214a-b), die um die inneren Hauben (212a-b) herum angeordnet sind,
- zwei untere Strukturbauteile (216a-b), die jeweils für die Befestigung einer inneren Haube (212a-b) an der zugehörigen äußeren Haube (214a-b) im Bereich eines unteren Abschnitts der Gondel (154) sorgen, und
- zwei obere Strukturbauteile (218a-b), die jeweils für die Befestigung einer inneren Haube (212a-b) an der zugehörigen äußeren Haube (214a-b) im Bereich eines oberen Abschnitts der Gondel (154) sorgen,
wobei jede äußere Haube (214a-b) über Scharniere an dem Pylon (152) angelenkt ist, deren Achsen (215a-b) im Allgemeinen parallel zur Längsachse (X) verlaufen, wobei das System **dadurch gekennzeichnet ist, dass**:
die beiden äußeren Hauben (214a-b) in der geschlossenen Stellung und im oberen Abschnitt der Gondel (154) im Bereich einer Trennebene (P') aneinanderliegen, die die Längsachse (X) enthält und mit der Mittelebene (P) einen spitzen Winkel (α) bildet, der in der Vorderansicht in Gegenuhrzeigerrichtung positiv ist, und
wobei die Achse (215a), die der äußeren Haube (214a) auf der Steuerbordseite entspricht, bezogen auf die Trennebene (P') steuerbordseitig angeordnet ist und wobei die Achse (215b), die der äußeren Haube (214b) auf der Backbordseite entspricht, bezogen auf eine Achse (215c), die bezogen auf die Mittelebene (P) zu der Achse (215a) symmetrisch ist, die der äußeren Haube (214a) auf der Steuerbordseite entspricht, backbordseitig angeordnet ist.

3. Antriebssystem (150) nach einem der Ansprüche 1 oder 2, wobei die beiden äußeren Hauben (214a-b) und die unteren Strukturbauteile (216a-b) im unteren Abschnitt der Gondel (154) und in der geschlossenen Stellung im Bereich der Trennebene (P') aneinanderliegen.

4. Antriebssystem (150) nach einem der Ansprüche 1 oder 2, wobei die beiden äußeren Hauben (214a-b) und die unteren Strukturbauteile (216a-b) im unteren Abschnitt der Gondel (154) und in der geschlossenen Stellung im Bereich der Trennebene (P) aneinanderliegen.

5. Luftfahrzeug (100), das einen Flügel (104) umfasst, unter dem mindestens ein Antriebssystem (150) nach einem der vorhergehenden Ansprüche mit seinem Pylon (152) befestigt ist.

## Claims

1. Propulsion system (150) for an aircraft (100), said propulsion system (150) having a longitudinal axis (X) and a vertical mid-plane (P) passing through the longitudinal axis (X) and having:
- a pylon (152) intended to be fastened under a wing (104) with a dihedral angle to a port side of the aircraft (100),
- a turbomachine with a core (208) fastened to the pylon (152), and
- a nacelle (154) in which the turbomachine is housed and which has:
- two inner cowls (212a-b) arranged around the core (208),
- two outer cowls (214a-b) arranged around the inner cowls (212a-b),
- two lower structural elements (216a-b), each fastening an inner cowl (212a-b) to the associated outer cowl (214a-b) at a bottom part of the nacelle (154), and
- two upper structural elements (218a-b), each fastening an inner cowl (212a-b) to the associated outer cowl (214a-b) at a top part of the nacelle (154),
wherein each outer cowl (214a-b) is mounted articulated on the pylon (152) via hinges of which the axes (215a-b) are generally parallel to the longitudinal axis (X),
the system being **characterized in that**: in the closed position and in the top part of the nacelle (154), the two outer cowls (214a-b) are contiguous at a separation plane (P') that contains the longitudinal axis (X) and makes, with the mid-plane (P), an acute angle (α) counted positively in the clockwise direction in front view, and
the axis (215b) corresponding to the port-side outer cowl (214b) is disposed on the port side with respect to the separation plane (P'), and wherein the axis (215a) corresponding to the starboard-side outer cowl (214a) is disposed on the starboard side with respect to an axis (215c) symmetrical to the axis (215b) corresponding to the port-side outer cowl (214b) with respect to the mid-plane (P).

2. Propulsion system (150) for an aircraft (100), said propulsion system (150) having a longitudinal axis (X) and a vertical mid-plane (P) passing through the longitudinal axis (X) and having:
- a pylon (152) intended to be fastened under a wing (104) with a dihedral angle to a starboard side of the aircraft (100),
- a turbomachine with a core (208) fastened to the pylon (152), and
- a nacelle (154) in which the turbomachine is housed and which has:
- two inner cowls (212a-b) arranged around the core (208),
- two outer cowls (214a-b) arranged around the inner cowls (212a-b),
- two lower structural elements (216a-b), each fastening an inner cowl (212a-b) to the associated outer cowl (214a-b) at a bottom part of the nacelle (154), and
- two upper structural elements (218a-b), each fastening an inner cowl (212a-b) to the associated outer cowl (214a-b) at a top part of the nacelle (154),
wherein each outer cowl (214a-b) is mounted articulated on the pylon (152) via hinges of which the axes (215a-b) are generally parallel to the longitudinal axis (X),
the system being **characterized in that**: in the closed position and in the top part of the nacelle (154), the two outer cowls (214a-b) are contiguous at a separation plane (P') that contains the longitudinal axis (X) and makes, with the mid-plane (P), an acute angle (α) counted positively in the anticlockwise direction in front view, and
the axis (215a) corresponding to the starboard-side outer cowl (214a) is disposed on the starboard side with respect to the separation plane (P'), and wherein the axis (215b) corresponding to the port-side outer cowl (214b) is disposed on the port side with respect to an axis (215c) symmetrical to the axis (215a) corresponding to the starboard-side outer cowl (214a) with respect to the mid-plane (P).

3. Propulsion system (150) according to either of Claims 1 and 2, wherein in the bottom part of the nacelle (154) and in the closed position, the two outer cowls (214a-b) and the lower structural elements (216a-b) are contiguous at the separation plane (P').

4. Propulsion system (150) according to either of Claims 1 and 2, wherein in the bottom part of the nacelle (154) and in the closed position, the two outer cowls (214a-b) and the lower structural elements (216a-b) are contiguous at the separation plane (P).

5. Aircraft (100) having a wing (104) beneath which is fastened at least one propulsion system (150) according to one of the preceding claims, via its pylon (152).
